(19) **Europäisches Patentamt / European Patent Office / Office européen des brevets**

(11) **EP 1 899 174 B1**

(12) **FASCICULE DE BREVET EUROPEEN**

(45) Date de publication et mention
de la délivrance du brevet:
**16.03.2016 Bulletin 2016/11**

(21) Numéro de dépôt: **06763949.2**

(22) Date de dépôt: **28.06.2006**

(51) Int Cl.:
**B60C 9/18** (2006.01)        **B60C 9/20** (2006.01)

(86) Numéro de dépôt international:
**PCT/EP2006/063653**

(87) Numéro de publication internationale:
**WO 2007/003557 (11.01.2007 Gazette 2007/02)**

(54) **PNEUMATIQUE POUR VEHICULES LOURDS**

LKW-REIFEN

TYRE FOR HEAVY VEHICLES

(84) Etats contractants désignés:
**AT BE BG CH CY CZ DE DK EE ES FI FR GB GR HU IE IS IT LI LT LU LV MC NL PL PT RO SE SI SK TR**

(30) Priorité: **30.06.2005 FR 0506762**

(43) Date de publication de la demande:
**19.03.2008 Bulletin 2008/12**

(73) Titulaires:
• **COMPAGNIE GENERALE DES ETABLISSEMENTS MICHELIN**
**63000 Clermont-Ferrand (FR)**
• **Michelin Recherche et Technique S.A.**
**1763 Granges-Paccot (CH)**

(72) Inventeurs:
• **NETZER, Gaëlle**
**F-63360 Gerzat (FR)**

• **COUE, Jean**
**F-63540 Romagnat (FR)**

(74) Mandataire: **Le Cam, Stéphane Georges Elie**
**Manufacture Francaise des Pneumatiques Michelin**
**23, place des Carmes-Déchaux**
**SGD/LG/PI - F35- Ladoux**
**63040 Clermont-Ferrand Cedex 9 (FR)**

(56) Documents cités:
**EP-A- 0 416 893      EP-A- 0 687 581**
**EP-A- 0 955 186      WO-A-2004/076206**
**FR-A- 1 586 370      GB-A- 2 038 248**
**US-A- 3 735 790      US-B1- 6 367 527**

• **PATENT ABSTRACTS OF JAPAN vol. 012, no. 416 (M-759), 4 novembre 1988 (1988-11-04) & JP 63 151504 A (BRIDGESTONE CORP), 24 juin 1988 (1988-06-24)**

## Description

La présente invention concerne un pneumatique à armature de carcasse radiale et plus particulièrement un pneumatique destiné à équiper des véhicules portant de lourdes charges et roulant à vitesse soutenue, tels que, par exemple les camions, tracteurs, remorques ou bus routiers.

L'armature de renforcement ou renforcement des pneumatiques et notamment des pneumatiques de véhicules de type poids-lourds est à l'heure actuelle - et le plus souvent - constituée par empilage d'une ou plusieurs nappes désignées classiquement « nappes de carcasse », «nappes sommet », etc. Cette façon de désigner les armatures de renforcement provient du procédé de fabrication, consistant à réaliser une série de produits semi-finis en forme de nappes, pourvues de renforts filaires souvent longitudinaux, qui sont par la suite assemblées ou empilées afin de confectionner une ébauche de pneumatique. Les nappes sont réalisées à plat, avec des dimensions importantes, et sont par la suite coupées en fonction des dimensions d'un produit donné. L'assemblage des nappes est également réalisé, dans un premier temps, sensiblement à plat. L'ébauche ainsi réalisée est ensuite mise en forme pour adopter le profil toroïdal typique des pneumatiques. Les produits semi-finis dits « de finition » sont ensuite appliqués sur l'ébauche, pour obtenir un produit prêt pour la vulcanisation.

Un tel type de procédé "classique" implique, en particulier pour la phase de fabrication de l'ébauche du pneumatique, l'utilisation d'un élément d'ancrage (généralement une tringle), utilisé pour réaliser l'ancrage ou le maintien de l'armature de carcasse dans la zone des bourrelets du pneumatique. Ainsi, pour ce type de procédé, on effectue un retournement d'une portion de toutes les nappes composant l'armature de carcasse (ou d'une partie seulement) autour d'une tringle disposée dans le bourrelet du pneumatique. On crée de la sorte un ancrage de l'armature de carcasse dans le bourrelet.

La généralisation dans l'industrie de ce type de procédé classique, malgré de nombreuses variantes dans la façon de réaliser les nappes et les assemblages, a conduit l'homme du métier à utiliser un vocabulaire calqué sur le procédé ; d'où la terminologie généralement admise, comportant notamment les termes «nappes», «carcasse», «tringle», «conformation» pour désigner le passage d'un profil plat à un profil toroïdal, etc.

Il existe aujourd'hui des pneumatiques qui ne comportent à proprement parler pas de «nappes» ou de «tringles» d'après les définitions précédentes. Par exemple, le document EP 0 582 196 décrit des pneumatiques fabriqués sans l'aide de produits semi-finis sous forme de nappes. Par exemple, les éléments de renforcement des différentes structures de renfort sont appliqués directement sur les couches adjacentes de mélanges caoutchouteux, le tout étant appliqué par couches successives sur un noyau toroïdal dont la forme permet d'obtenir directement un profil s'apparentant au profil final du pneumatique en cours de fabrication. Ainsi, dans ce cas, on ne retrouve plus de «semi-finis», ni de «nappes», ni de «tringle». Les produits de base tels les mélanges caoutchouteux et les éléments de renforcement sous forme de fils ou filaments, sont directement appliqués sur le noyau. Ce noyau étant de forme toroïdale, on n'a plus à former l'ébauche pour passer d'un profil plat à un profil sous forme de tore.

Par ailleurs, les pneumatiques décrits dans ce document ne disposent pas du "traditionnel" retournement de nappe carcasse autour d'une tringle. Ce type d'ancrage est remplacé par un agencement dans lequel on dispose de façon adjacente à ladite structure de renfort de flanc des fils circonférentiels, le tout étant noyé dans un mélange caoutchouteux d'ancrage ou de liaison.

Il existe également des procédés d'assemblage sur noyau toroïdal utilisant des produits semi-finis spécialement adaptés pour une pose rapide, efficace et simple sur un noyau central. Enfin, il est également possible d'utiliser un mixte comportant à la fois certains produits semi-finis pour réaliser certains aspects architecturaux (tels que des nappes, tringles, etc.), tandis que d'autres sont réalisés à partir de l'application directe de mélanges et/ou d'élément de renforcement.

Dans le présent document, afin de tenir compte des évolutions technologiques récentes tant dans le domaine de la fabrication que pour la conception de produits, les termes classiques tels que «nappes», «tringles», etc., sont avantageusement remplacés par des termes neutres ou indépendants du type de procédé utilisé. Ainsi, le terme «renfort de type carcasse» ou «renfort de flanc» est valable pour désigner les éléments de renforcement d'une nappe carcasse dans le procédé classique, et les éléments de renforcement correspondants, en général appliqués au niveau des flancs, d'un pneumatique produit selon un procédé sans semi-finis. Le terme «zone d'ancrage» pour sa part, peut désigner tout autant le "traditionnel" retournement de nappe carcasse autour d'une tringle d'un procédé classique, que l'ensemble formé par les éléments de renforcement circonférentiels, le mélange caoutchouteux et les portions adjacentes de renfort de flanc d'une zone basse réalisée avec un procédé avec application sur un noyau toroïdal.

D'une manière générale dans les pneumatiques de type poids-lourds, l'armature de carcasse est ancrée de part et d'autre dans la zone du bourrelet et est surmontée radialement par une armature de sommet constituée d'au moins deux couches, superposées et formées de fils ou câbles parallèles dans chaque couche. Elle peut également comprendre une couche de fils ou câbles métalliques à faible extensibilité faisant avec la direction circonférentielle un angle compris entre 45° et 90°, cette nappe, dite de triangulation, étant radialement située entre l'armature de carcasse et la première nappe de sommet dite de travail, formées de fils ou câbles parallèles présentant des angles au plus égaux à 45° en valeur absolue. La nappe de triangulation forme avec au moins ladite nappe de travail une armature triangulée, qui présente, sous les différentes contraintes qu'elle subit, peu de déformations, la nappe de triangulation ayant pour rôle essentiel de reprendre les efforts de compression transversale dont est l'objet l'ensemble des éléments de renforcement dans la zone du sommet du pneumatique.

L'armature de sommet comprend au moins une couche de travail ; lorsque ladite armature de sommet comporte au moins deux couches de travail, celles-ci sont formées d'éléments de renforcement métalliques inextensibles, parallèles entre eux dans chaque couche et croisés d'une couche à la suivante en faisant avec la direction circonférentielle des angles compris entre 10° et 45°. Lesdites couches de travail, formant l'armature de travail, peuvent encore être recouvertes d'au moins une couche dite de protection et formée d'éléments de renforcement avantageusement métalliques et extensibles, dits élastiques.

Dans le cas des pneumatiques pour véhicules "Poids-Lourds", une seule couche de protection est habituellement présente et ses éléments de protection sont, dans la plupart des cas, orientés dans la même direction et avec le même angle en valeur absolue que ceux des éléments de renforcement de la couche de travail radialement la plus à l'extérieur et donc radialement adjacente. Dans le cas de pneumatiques de Génie Civil destinés aux roulages sur sols plus ou moins accidentés, la présence de deux couches de protection est avantageuse, les éléments de renforcement étant croisés d'une couche à la suivante et les éléments de renforcement de la couche de protection radialement intérieure étant croisés avec les éléments de renforcement inextensibles de la couche de travail radialement extérieure et adjacente à ladite couche de protection radialement intérieure.

Des câbles sont dits inextensibles lorsque lesdits câbles présentent sous une force de traction égale à 10% de la force de rupture un allongement relatif au plus égal à 0,2%.

Des câbles sont dits élastiques lorsque lesdits câbles présentent sous une force de traction égale à la charge de rupture un allongement relatif au moins égal à 4%.

La direction circonférentielle du pneumatique, ou direction longitudinale, est la direction correspondant à la périphérie du pneumatique et définie par la direction de roulement du pneumatique.

La direction transversale ou axiale du pneumatique est parallèle à l'axe de rotation du pneumatique.

La direction radiale est une direction coupant l'axe de rotation du pneumatique et perpendiculaire à celui-ci.

L'axe de rotation du pneumatique est l'axe autour duquel il tourne en utilisation normale.

Un plan radial ou méridien est un plan qui contient l'axe de rotation du pneumatique.

Le plan médian circonférentiel, ou plan équatorial, est un plan perpendiculaire à l'axe de rotation du pneu et qui divise le pneumatique en deux moitiés.

Certains pneumatiques actuels, dits "routiers", sont destinés à rouler à grande vitesse et sur des trajets de plus en plus longs, du fait de l'amélioration du réseau routier et de la croissance du réseau autoroutier dans le monde. L'ensemble des conditions, sous lesquelles un tel pneumatique est appelé à rouler, permet sans aucun doute un accroissement du nombre de kilomètres parcourus, l'usure du pneumatique étant moindre ; par contre l'endurance de ce dernier et en particulier de l'armature de sommet est pénalisée.

Il existe en effet des contraintes au niveau de l'armature de sommet et plus particulièrement des contraintes de cisaillement entre les couches de sommet, alliées à une élévation non négligeable de la température de fonctionnement au niveau des extrémités de la couche de sommet axialement la plus courte, qui ont pour conséquence l'apparition et la propagation de fissures de la gomme au niveau desdites extrémités.

Afin d'améliorer l'endurance de l'armature de sommet du type de pneumatique étudié, des solutions relatives à la structure et qualité des couches et/ou profilés de mélanges caoutchouteux qui sont disposés entre et/ou autour des extrémités de nappes et plus particulièrement des extrémités de la nappe axialement la plus courte ont déjà été apportées.

Le brevet FR 1 389 428, pour améliorer la résistance à la dégradation des mélanges de caoutchouc situés au voisinage des bords d'armature de sommet, préconise l'utilisation, en combinaison avec une bande de roulement de faible hystérésis, d'un profilé de caoutchouc couvrant au moins les côtés et les bords marginaux de l'armature de sommet et constitué d'un mélange caoutchouteux à faible hystérésis.

Le brevet FR 2 222 232, pour éviter les séparations entre nappes d'armature de sommet, enseigne d'enrober les extrémités de l'armature dans un matelas de caoutchouc, dont la dureté Shore A est différente de celle de la bande de roulement surmontant ladite armature, et plus grande que la dureté Shore A du profilé de mélange caoutchouteux disposé entre les bords de nappes d'armature de sommet et armature de carcasse.

La demande française FR 2 728 510 propose de disposer, d'une part entre l'armature de carcasse et la nappe de travail d'armature de sommet, radialement la plus proche de l'axe de rotation, une nappe axialement continue, formée de câbles métalliques inextensibles faisant avec la direction circonférentielle un angle au moins égal à 60°, et dont la largeur axiale est au moins égale à la largeur axiale de la nappe de sommet de travail la plus courte, et d'autre part entre les deux nappes de sommet de travail une nappe additionnelle formée d'éléments métalliques, orientés sensiblement parallèlement à la direction circonférentielle.

La demande WO 2004/076206 décrit un pneumatique ayant les caractéristiques du préambule de la revendication 1.

Le document JP 63 151504 décrit un pneumatique comportant une couche de mélange caoutchouteux entre les extrémités des nappes de travail, l'extrémité axialement extérieure de la couche de mélange caoutchouteux étant axialement extérieure à celles des nappes de travail.

Le document US 6,367,527 décrit la combinaison d'une nappe continue d'éléments de renforcement circonférentiels positionnée radialement entre les nappes de travail avec des nappes d'épaule d'éléments de renforcement circonférentiels radialement extérieures à la nappe de travail radialement la plus extérieure et coiffant les extrémités de la nappe continue d'éléments de renforcement circonférentiels.

Les roulages prolongées des pneumatiques ainsi construits ont fait apparaître des ruptures de fatigue des câbles de la nappe additionnelle et plus particulièrement des bords de ladite nappe, que la nappe dite de triangulation soit présente ou non.

Pour remédier à de tels inconvénients et améliorer l'endurance de l'armature de sommet de ces pneumatiques, la demande française WO 99/24269 propose, de part et d'autre du plan équatorial et dans le prolongement axial immédiat de la nappe additionnelle d'éléments de renforcement sensiblement parallèles à la direction circonférentielle, de coupler, sur une certaine distance axiale, les deux nappes de sommet de travail formées d'éléments de renforcement croisés d'une nappe à la suivante pour ensuite les découpler par des profilés de mélange de caoutchouc au moins sur le prestant de la largeur commune aux dites deux nappes de travail.

Un but de l'invention est de fournir des pneumatiques pour véhicules « Poids-Lourds » dont les performances d'endurance sont encore améliorées par rapport aux pneumatiques usuels.

Ce but est atteint selon l'invention par un pneumatique à armature de carcasse radiale selon la revendication 1.

Selon un mode de réalisation avantageux de l'invention, l'extrémité axialement intérieure de la couche additionnelle est radialement extérieure au bord de la couche de sommet de travail radialement extérieure.

[Des éléments de renforcement orientés sensiblement perpendiculairement par rapport à des éléments de renforcement d'une couche de travail correspondent au sens de l'invention à des angles formés entre les directions de ces différents éléments compris entre 70 et 90° et de préférence supérieurs à 80 °.

Les largeurs axiales des couches d'éléments de renforcement ou positions axiales des extrémités desdites couches sont mesurées sur une coupe transversale d'un pneumatique, le pneumatique étant donc dans un état non gonflé.

Les essais réalisés avec des pneumatiques ainsi définis selon l'invention ont mis en évidence que les performances en terme d'endurance du pneumatique sont améliorées par rapport à des pneumatiques de conception plus traditionnelles ne comportant pas les couches additionnelles telles que décrites selon l'invention. Une interprétation de ces résultats peut être de constater que la couche additionnelle, et plus exactement les éléments de renforcement de la couche additionnelle, permet de limiter la propagation d'éventuelles amorces de fissures à l'extrémité de la couche de travail à laquelle elle est adjacente. Une telle action peut éventuellement être la conséquence d'un renforcement des masses caoutchouteuses de calandrage entre les éléments de renforcement de ladite couche de travail par les éléments de renforcement de la couche additionnelle.

Selon un mode de réalisation préféré de l'invention, une couche P de mélanges caoutchouteux cohésifs est disposée entre au moins une partie des couches de sommet de travail, l'extrémité axialement extérieure de la couche P étant axialement entre les extrémités des couches de sommet de travail axialement les moins large et plus large.

La couche P ainsi définie conduit à un découplage des couches de sommet de travail contribuant en soi à l'amélioration de l'endurance du pneumatique.

Il faut entendre par nappes couplées des nappes dont les éléments de renforcement respectifs sont séparés radialement d'au plus 1,5 mm, ladite épaisseur de caoutchouc étant mesurée radialement entre les génératrices respectivement supérieure et inférieure desdits éléments de renforcement.

Selon l'invention, la couche P est dimensionnée de sorte qu'un couplage puisse apparaître entre la couche additionnelle et le bord de la couche de sommet de travail axialement la plus large. L'invention prévoit ainsi avantageusement que l'extrémité axialement extérieure de la couche P est située à une distance du plan équatorial du pneumatique inférieure ou égale à la distance séparant dudit plan l'extrémité de la couche de sommet de travail axialement la plus large.

Selon un mode de réalisation avantageux de l'invention, le rapport du module d'élasticité de la couche P sur le module d'élasticité de la couche de calandrage de la couche de travail adjacente à la couche additionnelle est compris entre 0.5 et 1. La couche de calandrage considérée est la couche de caoutchouc qui sépare les éléments de renforcements de la couche de travail de la couche P.

On entend par « module d'élasticité » d'un mélange caoutchouteux, un module sécant d'extension à 10 % de déformation et à température ambiante.

Les mesures de module sont effectuées en traction selon la norme AFNOR-NFT-46002 de septembre 1988 : on mesure en seconde élongation (i.e., après un cycle d'accommodation) le module sécant nominal (ou contrainte apparente, en MPa) à 10% d'allongement (conditions normales de température et d'hygrométrie selon la norme AFNOR-NFT-40101 de décembre 1979).

Selon ce mode de réalisation de l'invention, le rapport des modules d'élasticité prévu permet notamment d'obtenir un découplage des couches de travail avec une moindre dissipation thermique et donc des échauffements moindres dans cette zone du pneumatique.

De préférence encore, la largeur axiale D de la couche P comprise entre l'extrémité axialement intérieure de ladite couche P et l'extrémité de la nappe de sommet de travail axialement la moins large est telle que :

$$3.\phi_2 \leq D \leq 20.\phi_2$$

avec $\phi_2$, diamètre des éléments de renforcement de la nappe de sommet de travail axialement la moins large. Une telle relation définit une zone d'engagement entre la couche P de mélanges caoutchouteux et la nappe de travail axialement la moins large. Un tel engagement en dessous d'une valeur égale à trois fois le diamètre des éléments de renforcement de la nappe de travail radialement extérieure peut ne pas être suffisant pour obtenir un découplage des nappes de travail pour notamment obtenir une atténuation des sollicitations en extrémité de la nappe de travail axialement la moins large. Une valeur de cet engagement supérieure à vingt fois le diamètre des éléments de renforcement de la nappe de travail axialement la moins large peut conduire à une diminution trop importante de la rigidité de dérive de l'armature de sommet du pneumatique.

De préférence, la largeur axiale D de la couche de mélange caoutchouteux cohésif P comprise entre l'extrémité axialement intérieure de ladite couche de mélange caoutchouteux cohésif P et l'extrémité axialement extérieure de la couche de sommet de travail axialement la moins large est supérieure à 5 mm.

L'invention prévoit encore de préférence que la couche P, à l'extrémité axialement extérieure de la nappe de sommet de travail axialement la moins large, présente une épaisseur telle que la distance radiale d entre les deux nappes de sommet de travail, séparées par ladite couche P, vérifie la relation :

$$3/5.\phi_2 < d < 5.\phi_2$$

avec $\phi_2$, diamètre des éléments de renforcement de la nappe de sommet de travail axialement la moins large.
La distance d est mesurée de câble à câble, c'est-à-dire entre le câble d'une première nappe de travail et le câble d'une seconde nappe de travail. En d'autres termes, cette distance d englobe l'épaisseur de la couche P et les épaisseurs respectives des mélanges caoutchouteux de calandrage, radialement extérieure aux câbles de la nappe de travail radialement intérieure et radialement intérieure aux câbles de la nappe de travail radialement extérieure.
Les différentes mesures d'épaisseur sont effectuées sur une coupe transversale d'un pneumatique, le pneumatique étant donc dans un état non gonflé.
Selon un mode de réalisation préféré de l'invention, la différence entre la largeur axiale de la couche de sommet de travail axialement la plus large et la largeur axiale de la couche de sommet de travail axialement la moins large est comprise entre 5 et 30 mm.
Selon une variante de réalisation avantageuse de l'invention, l'angle formé avec la direction circonférentielle par les éléments de renforcement des couches de sommet de travail est inférieur à 30° et de préférence inférieur à 25°.
Selon une variante de réalisation de l'invention, les couches de sommet de travail comportent des éléments de renforcement, croisés d'une nappe à l'autre, faisant avec la direction circonférentielle des angles variables selon la direction axiale, lesdits angles étant supérieurs sur les bords axialement extérieurs des couches d'éléments de renforcement par rapport aux angles desdits éléments mesurés au niveau du plan médian circonférentiel. Une telle réalisation de l'invention permet d'augmenter la rigidité circonférentielle dans certaines zones et au contraire de la diminuer dans d'autres, notamment pour diminuer les mises en compression de l'armature de carcasse.
Une réalisation préférée de l'invention prévoit encore que l'armature de sommet est complétée radialement à l'extérieur par au moins une couche supplémentaire, dite de protection, d'éléments de renforcement dits élastiques, orientés par rapport à la direction circonférentielle avec un angle compris entre 10° et 45° et de même sens que l'angle formé par les éléments inextensibles de la couche de travail qui lui est radialement adjacente.
La couche de protection peut avoir une largeur axiale inférieure à la largeur axiale de la couche de travail la moins large. Ladite couche de protection peut aussi avoir une largeur axiale supérieure à la largeur axiale de la couche de travail la moins large, telle qu'elle recouvre les bords de la couche de travail la moins large. La couche de protection formée d'éléments de renforcement élastiques peut, dans le dernier cas cité ci-dessus, être d'une part éventuellement découplée des bords de ladite couche de travail la moins large par des profilés, et avoir d'autre part une largeur axiale inférieure ou supérieure à la largeur axiale de la couche de sommet la plus large.
Lorsque la couche de protection est axialement plus étroite que la couche de sommet de travail radialement extérieure, l'invention prévoit avantageusement que le bord de la couche de protection est radialement adjacent et de préférence radialement extérieur à au moins le bord axialement intérieur de la couche additionnelle.
En comparaison des variantes précédentes de l'invention, pour obtenir une telle réalisation de l'invention, selon laquelle le bord de la couche de protection est radialement adjacente et extérieure à la couche additionnelle, soit l'extrémité de la couche de protection est axialement plus à l'extérieur, soit l'extrémité axialement intérieure de la couche additionnelle est axialement plus à l'intérieur. En d'autres termes, soit la couche de protection est axialement plus large, soit la couche additionnelle est axialement plus large en étant allongée axialement vers l'intérieur.

Selon l'un quelconque des modes de réalisation de l'invention évoqué précédemment, l'armature de sommet peut encore être complétée, par exemple radialement entre l'armature de carcasse et la couche de travail radialement la plus à l'intérieur, par une couche de triangulation constituée d'éléments de renforcement inextensibles faisant, avec la direction circonférentielle, un angle supérieur à 40° et de préférence de même sens que celui de l'angle formé par les éléments de renforcement de la couche radialement la plus proche de l'armature de carcasse.

Selon une première variante de réalisation de l'invention, les éléments de renforcement de la couche additionnelle sont des éléments de renforcement métalliques.

Selon une autre variante de réalisation de l'invention, les éléments de renforcement de la couche additionnelle sont des éléments de renforcement textiles.

Un mode de réalisation avantageux de l'invention prévoit que l'armature de sommet du pneumatique comporte en outre au moins une couche continue d'éléments de renforcement circonférentiels dont la largeur axiale est de préférence inférieure à la largeur axiale de la couche de sommet de travail axialement la plus large.

Les largeurs axiales des couches continues d'éléments de renforcement sont mesurées sur une coupe transversale d'un pneumatique, le pneumatique étant dans un état non gonflé.

La présence dans le pneumatique selon l'invention d'au moins une couche continue d'éléments de renforcement circonférentiels peut permettre de contribuer à l'obtention de rayons de courbures axiales quasi-infinis des différentes couches de renforcement dans une zone centrée sur le plan médian circonférentiel, ce qui contribue aux performances d'endurance du pneumatique.

Selon un mode de réalisation avantageux de l'invention, les éléments de renforcement d'au moins une couche continue d'éléments de renforcement circonférentiels sont des éléments de renforcement métalliques présentant un module sécant à 0,7 % d'allongement compris entre 10 et 120 GPa et un module tangent maximum inférieur à 150 GPa.

Selon une réalisation préférée, le module sécant des éléments de renforcement à 0,7 % d'allongement est inférieur à 100 GPa et supérieur à 20 GPa, de préférence compris entre 30 et 90 GPa et de préférence encore inférieur à 80 GPa.

De préférence également, le module tangent maximum des éléments de renforcement est inférieur à 130 GPa et de préférence encore inférieur à 120 GPa.

Les modules exprimés ci-dessus sont mesurés sur une courbe contrainte de traction en fonction de l'allongement déterminée avec une précontrainte de 20 MPa ramenée à la section de métal de l'élément de renforcement, la contrainte de traction correspondant à une tension mesurée ramenée à la section de métal de l'élément de renforcement.

Les modules des mêmes éléments de renforcement peuvent être mesurés sur une courbe contrainte de traction en fonction de l'allongement déterminée avec une précontrainte de 10 MPa ramenée à la section globale de l'élément de renforcement, la contrainte de traction correspondant à une tension mesurée ramenée à la section globale de l'élément de renforcement. La section globale de l'élément de renforcement est la section d'un élément composite constitué de métal et de caoutchouc, ce dernier ayant notamment pénétré l'élément de renforcement pendant la phase de cuisson du pneumatique.

Selon cette formulation relative à la section globale de l'élément de renforcement, les éléments de renforcement d'au moins une couche d'éléments de renforcement circonférentiels sont des éléments de renforcement métalliques présentant un module sécant à 0,7 % d'allongement compris entre 5 et 60 GPa et un module tangent maximum inférieur à 75 GPa.

Selon une réalisation préférée, le module sécant des éléments de renforcement à 0,7 % d'allongement est inférieur à 50 GPa et supérieur à 10 GPa, de préférence compris entre 15 et 45 GPa et de préférence encore inférieure à 40 GPa.

De préférence également, le module tangent maximum des éléments de renforcement est inférieur à 65 GPa et de préférence encore inférieur à 60 GPa.

Selon un mode de réalisation préféré, les éléments de renforcements d'au moins une couche continue d'éléments de renforcement circonférentiels sont des éléments de renforcement métalliques présentant une courbe contrainte de traction en fonction de l'allongement relatif ayant des faibles pentes pour les faibles allongements et une pente sensiblement constante et forte pour les allongements supérieurs. De tels éléments de renforcement de la couche continue d'éléments de renforcement circonférentiels sont habituellement dénommés éléments "bi-module".

Selon une réalisation préférée de l'invention, la pente sensiblement constante et forte apparaît à partir d'un allongement relatif compris entre 0,1% et 0,5%.

Les différentes caractéristiques des éléments de renforcement énoncées ci-dessus sont mesurées sur des éléments de renforcement prélevés sur des pneumatiques.

Des éléments de renforcement plus particulièrement adaptés à la réalisation d'au moins une couche continue d'éléments de renforcement circonférentiels selon l'invention sont par exemple des assemblages de formule 21.23, dont la construction est 3x(0.26+6x0.23) 4.4/6.6 SS ; ce câble à torons est constitué de 21 fils élémentaires de formule 3 x (1+6), avec 3 torons tordus ensemble chacun constitué de 7 fils, un fil formant une âme centrale de diamètre égal à 26/100 mm et 6 fils enroulés de diamètre égal à 23/100 mm. Un tel câble présente un module sécant à 0,7% égal à 45 GPa et un module tangent maximum égal à 98 GPa, mesurés sur une courbe contrainte de traction en fonction de l'allongement déterminée avec une précontrainte de 20 MPa ramenée à la section de métal de l'élément de renforcement, la contrainte de traction correspondant à une tension mesurée ramenée à la section de métal de l'élément de renforcement. Sur une courbe contrainte de traction en fonction de l'allongement déterminée avec une précontrainte de 10 MPa ramenée à la section globale de l'élément de renforcement, la contrainte de traction correspondant à une tension mesurée ramenée à la section globale de l'élément de renforcement, ce câble de formule 21.23 présente un module sécant à 0,7% égal à 23 GPa et un module tangent maximum égal à 49 GPa.

De la même façon, un autre exemple d'éléments de renforcement est un assemblage de formule 21.28, dont la construction est 3x(0.32+6x0.28) 6.2/9.3 SS. Ce câble présente un module sécant à 0,7% égal à 56 GPa et un module tangent maximum égal à 102 GPa, mesurés sur une courbe contrainte de traction en fonction de l'allongement déterminée avec une précontrainte de 20 MPa ramenée à la section de métal de l'élément de renforcement, la contrainte de traction correspondant à une tension mesurée ramenée à la section de métal de l'élément de renforcement. Sur une courbe contrainte de traction en fonction de l'allongement déterminée avec une précontrainte de 10 MPa ramenée à la section globale de l'élément de renforcement, la contrainte de traction correspondant à une tension mesurée ramenée à la section globale de l'élément de renforcement, ce câble de formule 21.28 présente un module sécant à 0,7% égal à 27 GPa et un module tangent maximum égal à 49 GPa.

L'utilisation de tels éléments de renforcement dans au moins une couche continue d'éléments de renforcement circonférentiels permet notamment de conserver des rigidités de la couche satisfaisante y compris après les étapes de conformation et de cuisson dans des procédés de fabrication usuels.

Selon un deuxième mode de réalisation de l'invention, les éléments de renforcement circonférentiels d'une couche continue peuvent être formés d'éléments métalliques inextensibles et coupés de manière à former des tronçons de longueur très inférieure à la circonférence de la couche la moins longue, mais préférentiellement supérieure à 0,1 fois ladite circonférence, les coupures entre tronçons étant axialement décalées les unes par rapport aux autres. De préférence encore, le module d'élasticité à la traction par unité de largeur de la couche continue d'éléments de renforcement circonférentiels est inférieur au module d'élasticité à la traction, mesuré dans les mêmes conditions, de la couche de sommet de travail la plus extensible. Un tel mode de réalisation permet de conférer, de manière simple, à la couche continue d'éléments de renforcement circonférentiels un module pouvant facilement être ajusté (par le choix des intervalles entre tronçons d'une même rangée), mais dans tous les cas plus faible que le module de la couche constituée des mêmes éléments métalliques mais continus, le module de la couche continue d'éléments de renforcement circonférentiels étant mesuré sur une couche vulcanisée d'éléments coupés, prélevée sur le pneumatique.

Selon un troisième mode de réalisation de l'invention, les éléments de renforcement circonférentiels d'une couche continue sont des éléments métalliques ondulés, le rapport a/λ, de l'amplitude d'ondulation sur la longueur d'onde étant au plus égale à 0,09. De préférence, le module d'élasticité à la traction par unité de largeur de la couche continue d'éléments de renforcement circonférentiels est inférieur au module d'élasticité à la traction, mesuré dans les mêmes conditions, de la couche de sommet de travail la plus extensible

Les éléments métalliques sont préférentiellement des câbles d'acier.

Selon une variante de réalisation de l'invention, au moins une couche continue d'éléments de renforcement circonférentiels est disposée radialement entre deux couches de sommet de travail.

Selon cette dernière variante de réalisation, la couche continue d'éléments de renforcement circonférentiels permet de limiter de manière plus importante les mises en compression des éléments de renforcement de l'armature de carcasse qu'une couche semblable mise en place radialement à l'extérieur des autres couches de sommet de travail. Elle est préférablement radialement séparée de l'armature de carcasse par au moins une couche de travail de façon à limiter les sollicitations desdits éléments de renforcement et ne pas trop les fatiguer.

Avantageusement encore dans le cas d'une couche continue d'éléments de renforcement circonférentiels disposée radialement entre deux couches de sommet de travail, les largeurs axiales des couches de sommet de travail radialement adjacentes à la couche d'éléments de renforcement circonférentiels sont supérieures à la largeur axiale de ladite couche d'éléments de renforcement circonférentiels.

D'autres détails et caractéristiques avantageux de l'invention ressortiront ci-après de la description des exemples de réalisation de l'invention en référence aux figures 1 à 5 qui représentent :

- figure 1, une vue méridienne d'un schéma d'un pneumatique selon un mode de réalisation de l'invention,

- figure 2, une vue méridienne d'un schéma d'un pneumatique selon un deuxième mode de réalisation de l'invention,

- figure 3, une vue méridienne d'un schéma d'un pneumatique selon un troisième mode de réalisation de l'invention,

- figure 4, une vue méridienne d'un schéma d'un pneumatique selon un quatrième mode de réalisation de l'invention,

- figure 5, une vue méridienne d'un schéma d'un pneumatique selon un cinquième mode de réalisation de l'invention.

Les figures ne sont pas représentées à l'échelle pour en simplifier la compréhension. Les figures ne représentent qu'une demi-vue d'un pneumatique qui se prolonge de manière symétrique par rapport à l'axe XX' qui représente le plan médian circonférentiel, ou plan équatorial, d'un pneumatique.

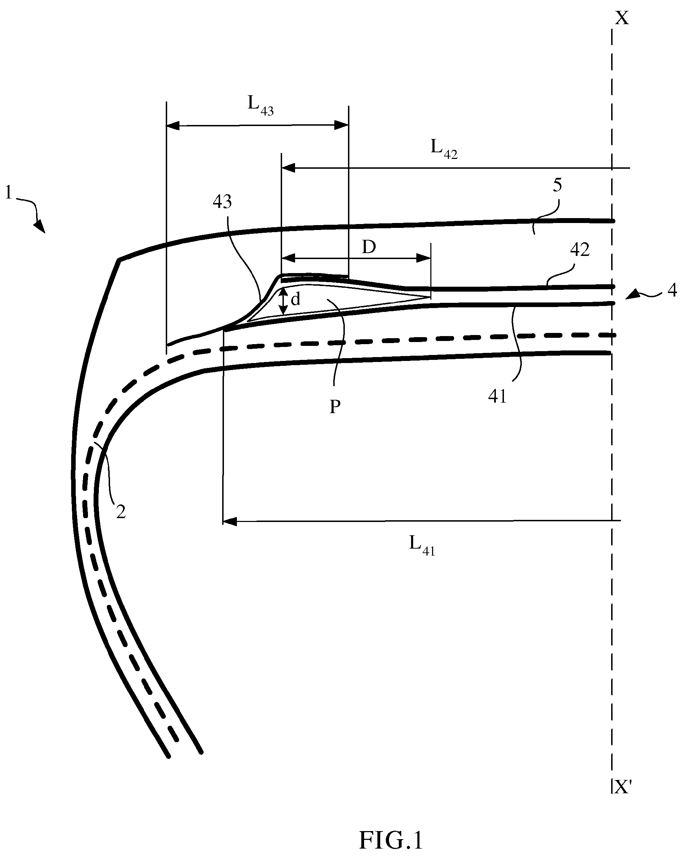

Sur la figure 1, le pneumatique 1, de dimension 295/60 R 22.5 X, a un rapport de forme H/S égal à 0,60, H étant la hauteur du pneumatique 1 sur sa jante de montage et S sa largeur axiale maximale. Ledit pneumatique 1 comprend une armature de carcasse radiale 2 ancrée dans deux bourrelets, non représentés sur la figure. L'armature de carcasse est formée d'une seule couche de câbles métalliques. Cette armature de carcasse 2 est frettée par une armature de sommet 4, formée radialement de l'intérieur à l'extérieur :

- d'une première couche de travail 41 formée de câbles métalliques inextensibles 11.35 non frettés, continus sur toute la largeur de la nappe, orientés d'un angle égal à 18°,

- d'une seconde couche de travail 42 formée de câbles métalliques inextensibles 11.35 non frettés, continus sur toute la largeur de la nappe, orientés d'un angle égal à 18° et croisés avec les câbles métalliques de la couche 41 ; la couche 42 est axialement plus petite que la couche 41,

- d'une couche additionnelle 43 formée de câbles orientés sensiblement perpendiculairement par rapport aux éléments de renforcement de la couche de travail 42 ; les câbles présentent un angle de 72° avec la direction circonférentielle et de 90° avec les éléments de renforcement de la couche 42. La couche 43 est radialement extérieure et adjacente à la couche de travail radialement extérieure 42 et s'étend jusqu'à la couche 41 pour être couplée avec cette dernière. La couche 43 s'étend ensuite axialement au-delà de l'extrémité axialement extérieure de la couche 41. Des essais ont été réalisés d'une part avec des câbles métalliques 4.23 et d'autre part avec des câbles textile PET 144x2.

La largeur axiale $L_{41}$ de la première couche de travail 41 est égale à 234 mm.

La largeur axiale $L_{42}$ de la deuxième couche de travail 42 est égale à 216 mm.

La couche additionnelle 43 d'élément de renforcement orientés sensiblement perpendiculairement par rapport aux éléments de renforcement de la couche de travail 42 présente une largeur égale à 42 mm ; elle présente une zone de recouvrement axiale avec la couche 42 égale à 14 mm et une zone de recouvrement avec la couche 41 égale à 3 mm.

L'armature de sommet est elle-même coiffée d'une bande de roulement 5.

Une couche caoutchouteuse P, radialement entre et au contact des couches de sommet de travail 41 et 42, dite gomme de découplage, recouvre l'extrémité de ladite couche de travail 42 et s'étend de sorte que son extrémité axialement extérieure soit à une distance du plan médian circonférentiel inférieure à la demi largeur axiale de la couche 41. La couche P de mélange caoutchouteux assure ainsi un découplage entre la couche de travail 41 et l'extrémité de la couche de travail 42 radialement extérieure. La zone d'engagement de la couche P entre les deux couche de travail 41 et 42 est définie par son épaisseur ou plus précisément la distance radiale d entre l'extrémité de la couche 42 et la couche 41 et par sa largeur axiale D comprise entre l'extrémité axialement intérieure de ladite couche P et l'extrémité de la couche de sommet de travail radialement extérieure. La distance radiale d est égale à 3.5 mm. La distance axiale D est égale à 20 mm, soit environ 13.3 fois le diamètre $\phi_2$ des éléments de renforcement de la nappe de travail 42, le diamètre $\phi_2$ étant égal à 1.5 mm.

Les modules d'élasticité de la couche P et de la couche de calandrage de la couche 42 sont identiques et égaux à 10MPa ; le rapport desdits modules est donc égal à 1.

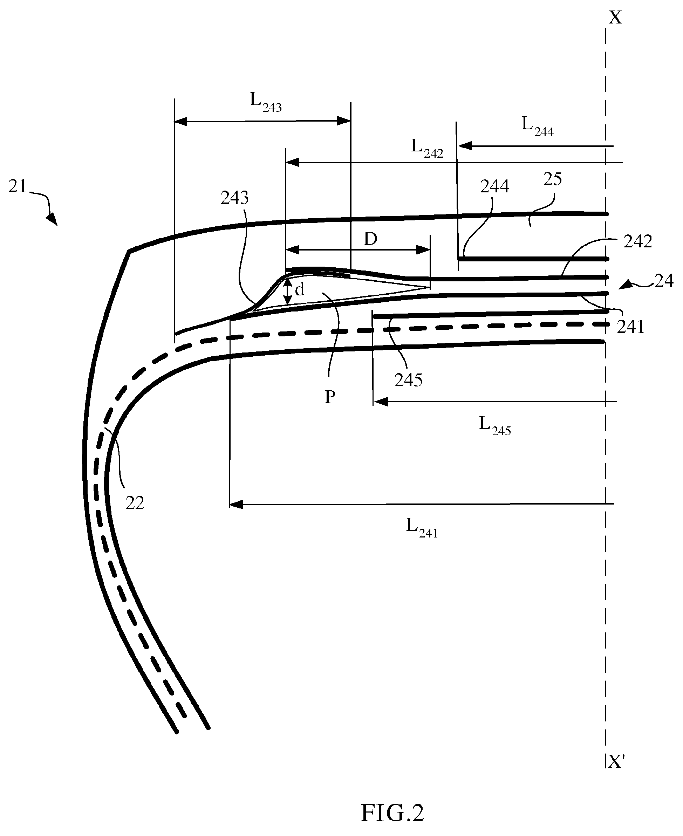

Sur la figure 2, le pneumatique 21 diffère de celui représenté sur la figure 1 d'une part en ce qu'il comporte en outre :

- une couche de protection 244 formée de câbles métalliques élastiques 18x23 dont la largeur axiale est égale à 160 mm.

- une couche d'éléments de renforcement complémentaire 245, dite de triangulation, de largeur sensiblement égale à 200 mm formée de câbles métalliques inextensibles 9x28. Les éléments de renforcement de cette couche 245 forment un angle d'environ 45° avec la direction circonférentielle et sont orientés dans le même sens que les éléments de renforcement de la couche de travail 241. Cette couche 245 permet notamment de contribuer à la reprise des efforts de compression transversale dont est l'objet l'ensemble des éléments de renforcement dans la zone du sommet du pneumatique.

D'autre part, le pneumatique 21 diffère de celui représenté sur la figure 1 en ce que la couche 243 est radialement adjacente à la couche 342 mais radialement intérieure à celle-ci.

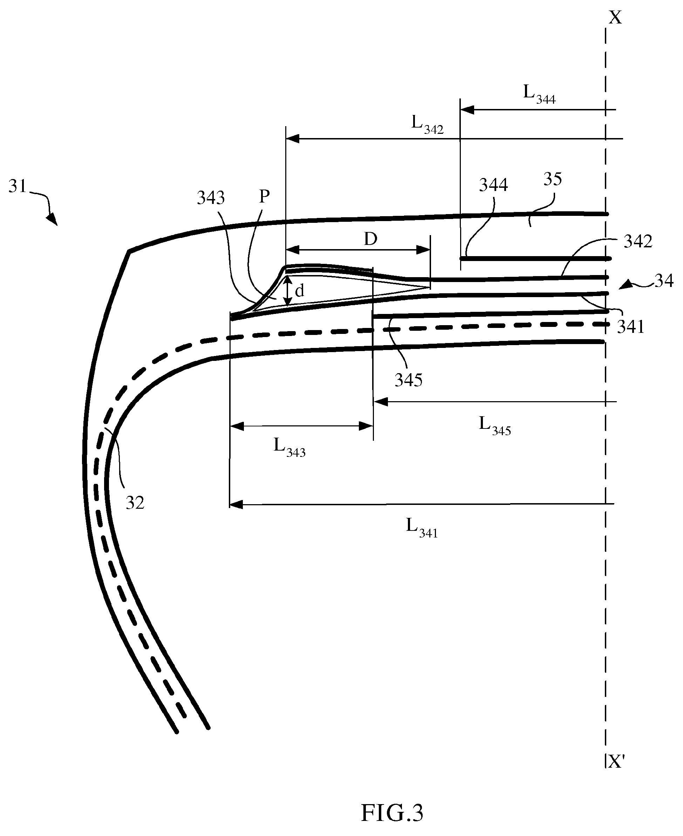

Sur la figure 3, le pneumatique 31 diffère de celui représenté sur la figure 1 d'une part en ce qu'il comporte des couches de protections 344 et de triangulation 345 et en ce qu'il comporte une couche additionnelle 343 dont l'extrémité axialement extérieure est dans une position identique à celle de l'extrémité de la couche 341. La couche 343 présente une largeur L343 égale à 36 mm. Selon d'autres réalisations conformes à l'invention mais non représentées sur les figures, la couche additionnelle 343 peut encore présentée une extrémité axialement extérieure dans une position axialement intérieure à l'extrémité de la couche 341.

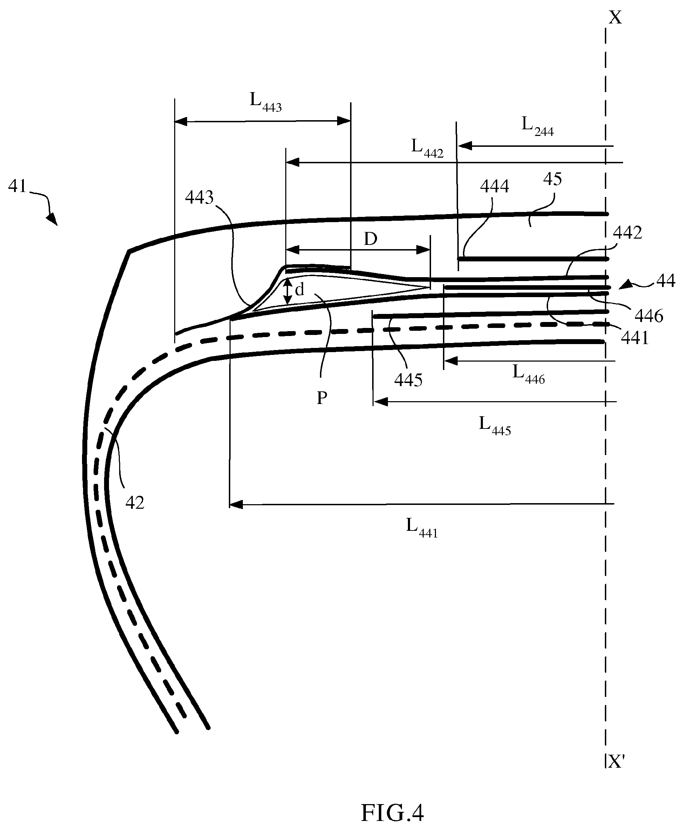

La figure 4 illustre une variante de réalisation d'un pneumatique 41 conformément à l'invention qui comparée à la réalisation de la figure 2 comporte en outre une couche continue 446 d'éléments de renforcement circonférentiels intercalée entre les couches de travail 441 et 442. Cette couche continue 446 présente une largeur L$_{446}$ égale à 196 mm, inférieure aux largeurs des couches de travail 441 et 442.

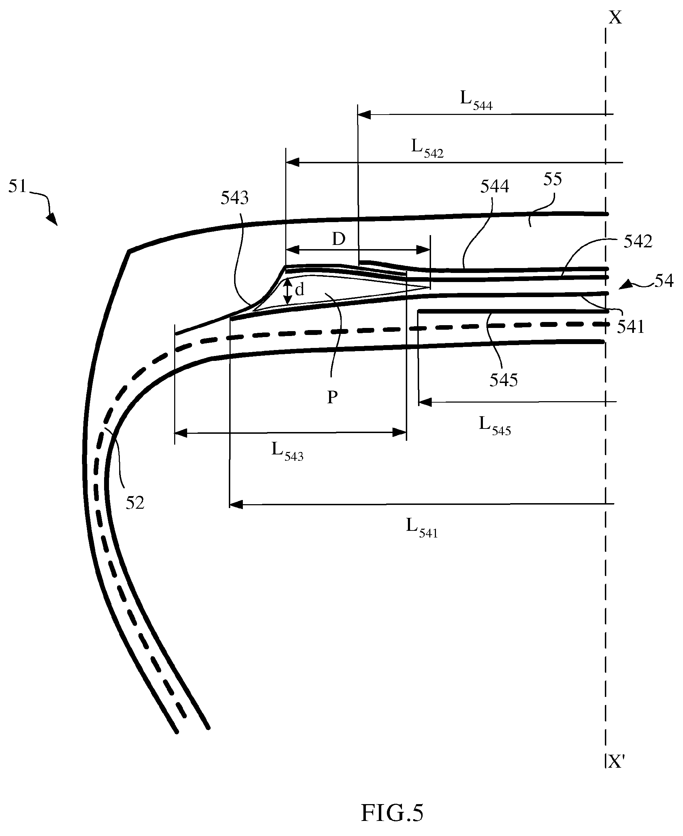

La figure 5 illustre encore une autre variante de réalisation d'un pneumatique 51 selon l'invention qui comparée à la réalisation de la figure 2 présente une couche de protection 544 radialement adjacente et extérieure à la couche additionnelle 543. Selon ce mode de réalisation l'extrémité axialement intérieure de la couche additionnelle 543 est ainsi radialement entre la couche de travail 542 et la couche de protection 544 sur une largeur axiale de 10 mm.

Sur la figure 5, la couche de protection a été élargie par rapport à celles des autres figures comportant une telle couche de protection ; un résultat similaire et non représenté sur les figures peut être obtenu avec une couche additionnelle plus large et dont l'extrémité axialement intérieure est plus à l'intérieur pour obtenir un chevauchement avec une couche de protection axialement plus étroite que celle de la figure 5.

Des essais ont été réalisés avec le pneumatique réalisé selon l'invention conformément à la représentation de la figure 3 et comparés avec un pneumatique de référence identique mais réalisé selon une configuration usuelle. Les essais ont été réalisés d'une part avec des éléments de renforcement de la couche additionnelle métalliques de type 4.23 et d'autre part avec des éléments de renforcement textiles de type PET 144x2.

Le pneumatique usuel ne comporte pas les couches additionnelles 43. Ils comportent par contre des couches de protection et de triangulation.

Les premiers essais d'endurance ont été réalisés en équipant des véhicules identiques avec chacun des pneumatiques et en faisant suivre des parcours en ligne droite à chacun des véhicules, les pneumatiques étant soumis à des charges supérieures à la charge nominale pour accélérer ce type de test.

Le véhicule de référence comportant les pneumatiques usuels est associé à une charge par pneumatique de 3600 Kg en début de roulage et évolue pour atteindre une charge de 4350 Kg en fin de roulage.

Le véhicule comportant les pneumatiques selon l'invention est associé à une charge par pneumatique de 3800 Kg en début de roulage et évolue pour atteindre une charge de 4800 Kg en fin de roulage.

Les essais sont stoppés lorsque le pneumatique est endommagé et/ou ne fonctionne plus de façon normale.

Les essais ainsi réalisés ont montré que les véhicules équipés de pneumatiques selon l'invention avec les éléments de renforcement métalliques et avec les éléments de renforcement textiles ont parcouru des distances supérieures ou égales à la distance parcourue par les véhicules de référence.

D'autres essais d'endurance ont été réalisés sur une machine de tests en alternant des séquences de virage à gauche, à droite puis de roulage en ligne droite dans des conditions de charge variant de 60 à 200 % de la charge nominale et de poussée variant de 0 à 0.35 fois la charge appliquée. La vitesse est comprise entre 30 et 70 km/h. Les essais sont stoppés lorsque le pneumatique est endommagé et/ou ne fonctionne plus de façon normale.

Les résultats obtenus montrent des gains en distances parcourues par les pneumatiques selon l'invention avec les éléments de renforcement métalliques et avec les éléments de renforcement textiles, celles-ci étant supérieures à la distance parcourue par les pneumatiques de référence.

## Revendications

1. Pneumatique (1-51) à armature de carcasse radiale (2-52) comprenant une armature de sommet (4-54) formée d'au moins deux couches de sommet de travail (41-541, 42-542) d'éléments de renforcement inextensibles, croisés d'une nappe à l'autre en faisant avec la direction circonférentielle des angles compris entre 10° et 45°, elle-même coiffée radialement d'une bande de roulement (5-55), ladite bande de roulement étant réunie à deux bourrelets par l'intermédiaire de deux flancs, la couche de sommet de travail (41-541) axialement la plus large étant radialement intérieure aux autres couches de sommet de travail (42-542), **caractérisé en ce qu'**il comprend additionnellement dans chaque épaule au moins une couche (43-543) d'éléments de renforcement, parallèles entre eux dans la couche et formant un angle avec les éléments de renforcement de la couche de travail radialement adjacente à ladite couche additionnelle compris entre 80° et 90°, **en ce que** l'extrémité axialement intérieure de ladite couche additionnelle (43-543) est radialement adjacente au bord de la couche de sommet de travail radialement extérieure (42-542), **en ce qu'**au moins une partie de ladite couche additionnelle (43-543) est radialement et/ou axialement adjacente au bord de la couche de sommet de travail (41-541) axialement la plus large.

2. Pneumatique (1-51) selon la revendication 1, **caractérisé en ce que** l'extrémité axialement intérieure de ladite couche additionnelle (43-543) est radialement extérieure au bord de la couche de sommet de travail (42-542) radialement extérieure.

3. Pneumatique (1-51) selon la revendication 1 ou 2, **caractérisé en ce qu'**est disposée, entre au moins une partie des couches de sommet de travail (41-541, 42-542), une couche P de mélanges caoutchouteux cohésifs et **en ce que** l'extrémité axialement extérieure de la couche P est axialement entre les extrémités des couches de sommet de travail (41-541, 42-542) axialement les moins large et plus large.

4. Pneumatique (1-51) selon la revendication 3, **caractérisé en ce que** le rapport du module d'élasticité de la couche P sur le module d'élasticité de la couche de calandrage de la couche de travail adjacente à la couche additionnelle (43-543) est compris entre 0.5 et 1.

5. Pneumatique (1-51) selon la revendication 3 ou 4, **caractérisé en ce que** la largeur axiale D de la couche P comprise entre l'extrémité axialement intérieure de ladite couche P et l'extrémité de la nappe de sommet de travail (42-542) axialement la moins large est telle que :

$$3.\phi_2 \leq D \leq 20.\phi_2$$

avec $\phi_2$, diamètre des éléments de renforcement de la nappe de sommet de travail radialement extérieure.

6. Pneumatique (1-51) selon l'une des revendications 3 à 5, **caractérisé en ce que** la largeur axiale D de la couche de mélange caoutchouteux cohésif P comprise entre l'extrémité axialement intérieure de ladite couche de mélange caoutchouteux cohésif P et l'extrémité axialement extérieure de la couche de sommet de travail (42-542) axialement la moins large est supérieure à 5 mm.

7. Pneumatique (1-51) selon l'une des revendications 3 à 6, **caractérisé en ce que** la couche P, à l'extrémité axialement extérieure de la nappe de sommet de travail (42-542) axialement la moins large, présente une épaisseur telle que la distance d radiale entre les deux nappes de sommet de travail (41-541, 42-542), séparées par ladite couche P, vérifie la relation :

$$3/5.\phi_2 < d < 5.\phi_2$$

avec $\phi_2$, diamètre des éléments de renforcement de la nappe de sommet de travail radialement extérieure.

8. Pneumatique (1-51) selon l'une des revendications précédentes, **caractérisé en ce que** la différence entre la largeur axiale de la couche de sommet de travail (41-541) axialement la plus large et la largeur axiale de la couche de sommet de travail (42-542) axialement la moins large est comprise entre 5 et 30 mm.

9. Pneumatique (1-51) selon l'une des revendications précédentes, **caractérisé en ce que** l'angle formé avec la direction circonférentielle par les éléments de renforcement des couches de sommet de travail (41-541, 42-542) est inférieur à 30° et de préférence inférieur à 25°.

10. Pneumatique (1-51) selon l'une des revendications précédentes, **caractérisé en ce que** les couches de sommet de travail (41-541, 42-542) comportent des éléments de renforcement, croisés d'une nappe à l'autre, faisant avec la direction circonférentielle des angles variables selon la direction axiale.

11. Pneumatique (21-51) selon l'une des revendications précédentes, **caractérisé en ce que** l'armature de sommet (24-54) est complétée radialement à l'extérieur par au moins une nappe supplémentaire (244-544), dite de protection, d'éléments de renforcement dits élastiques, orientés par rapport à la direction circonférentielle avec un angle compris entre 10° et 45° et de même sens que l'angle formé par les éléments inextensibles de la nappe de travail (42-542) qui lui est radialement adjacente.

12. Pneumatique (21-51) selon l'une des revendications précédentes, **caractérisé en ce que** l'armature de sommet (24-54) comporte une couche de triangulation (245-545) formée d'éléments de renforcement métalliques faisant avec la direction circonférentielle des angles supérieurs à 40°.

13. Pneumatique (1-51) selon l'une des revendications précédentes, **caractérisé en ce que** les éléments de renforcement de ladite couche additionnelle (43-543) sont des éléments de renforcement métalliques.

14. Pneumatique (1-51) selon l'une des revendications 1 à 12, **caractérisé en ce que** les éléments de renforcement de ladite couche additionnelle (43-543) sont des éléments de renforcement textiles.

15. Pneumatique (41) selon l'une des revendications précédentes, **caractérisé en ce que** l'armature de sommet (44) comporte au moins une couche continue (446) d'éléments de renforcement circonférentiels.

16. Pneumatique (41) selon la revendication 15, **caractérisé en ce que** la largeur axiale d'au moins une couche (446) continue d'éléments de renforcement circonférentiels est inférieure à la largeur axiale de la couche de sommet de travail (441) axialement la plus large.

17. Pneumatique (41) selon la revendication 15 ou 16, **caractérisé en ce qu'**au moins une couche continue (446) d'éléments de renforcement circonférentiels est disposée radialement entre deux couches de sommet de travail (441, 442).

18. Pneumatique (41) selon la revendication 17, **caractérisé en ce que** les largeurs axiales des couches de sommet de travail (441, 442) radialement adjacentes à la couche continue (446) d'éléments de renforcement circonférentiels sont supérieures à la largeur axiale de ladite couche continue d'éléments de renforcement circonférentiels.

19. Pneumatique (41) selon l'une des revendications 15 à 18, **caractérisé en ce que** les éléments de renforcement d'au moins une couche continue (446) d'éléments de renforcement circonférentiels sont des éléments de renforcement métalliques présentant un module sécant à 0,7 % d'allongement compris entre 10 et 120 GPa et un module tangent maximum inférieur à 150 GPa.

20. Pneumatique (41) selon la revendication 19, **caractérisé en ce que** le module sécant des éléments de renforcement à 0,7 % d'allongement est inférieur à 100 GPa, de préférence supérieur à 20 GPa et de préférence encore compris entre 30 et 90 GPa.

21. Pneumatique (41) selon l'une des revendications 19 ou 20, **caractérisé en ce que** le module tangent maximum des éléments de renforcement est inférieur à 130 GPa et de préférence inférieur à 120 GPa.

22. Pneumatique (41) selon l'une des revendications 15 à 21, **caractérisé en ce que** les éléments de renforcement d'au moins une couche continue (446) d'éléments de renforcement circonférentiels sont des éléments de renforcement métalliques présentant une courbe contrainte de traction en fonction de l'allongement relatif ayant des faibles pentes pour les faibles allongements et une pente sensiblement constante et forte pour les allongements supérieurs.

23. Pneumatique (41) selon l'une des revendications 15 à 18, **caractérisé en ce que** les éléments de renforcement d'au moins une couche continue (446) d'éléments de renforcement circonférentiels sont des éléments de renforcement métalliques coupés de manière à former des tronçons de longueur inférieure à la circonférence de la nappe la moins longue, mais supérieure à 0,1 fois ladite circonférence, les coupures entre tronçons étant axialement décalées les unes par rapport aux autres, le module d'élasticité à la traction par unité de largeur de la couche continue d'éléments de renforcement circonférentiels étant de préférence inférieur au module d'élasticité à la traction, mesuré dans les mêmes conditions, de la couche de sommet de travail la plus extensible.

24. Pneumatique (41) selon l'une des revendications 15 à 18, **caractérisé en ce que** les éléments de renforcement d'au moins une couche continue (446) d'éléments de renforcement circonférentiels sont des éléments de renforcement métalliques ondulés, le rapport a/λ, de l'amplitude d'ondulation a sur la longueur d'onde λ étant au plus égale à 0,09, le module d'élasticité à la traction par unité de largeur de la couche continue d'éléments de renforcement circonférentiels étant de préférence inférieur au module d'élasticité à la traction, mesuré dans les mêmes conditions, de la couche de sommet de travail la plus extensible.

**Patentansprüche**

1. Reifen (1-51) mit radialer Karkassenbewehrung (2-52) mit einer Laufflächenkronenbewehrung (4-54), die aus mindestens zwei Arbeitslaufflächenschichten (41-541, 42-542) nicht dehnbarer Verstärkungselemente gebildet ist, die von einer Lage zur anderen gekreuzt sind, indem sie mit der Umfangsrichtung Winkel bilden, die zwischen 10° und 45° liegen, auf der radial eine Lauffläche (5-55) liegt, wobei die Lauffläche mit zwei Wülsten über zwei Flanken verbunden ist, wobei die axial breiteste Arbeitslaufflächenschicht (41-541) radial innerhalb der anderen Arbeitslaufflächenschichten (42-542) liegt, **dadurch gekennzeichnet, dass** der Reifen zusätzlich in jeder Schulter mindestens eine Schicht (43-543) Verstärkungselemente aufweist, die parallel untereinander in der Schicht sind und einen Winkel mit den Verstärkungselementen der Arbeitsschicht, die radial neben der zusätzlichen Schicht liegt, bilden, der zwischen 80° und 90° umfasst, dass das axial innere Ende der zusätzlichen Schicht (43-543) radial neben dem Rand der radial äußeren Arbeitslaufflächenschicht (42-542) liegt und dass mindestens ein Teil der zusätzlichen Schicht (43-543) radial und/oder axial neben dem Rand der Arbeitslaufflächenschicht (41-541), die axial die breiteste ist, liegt.

2. Reifen (1-51) nach Anspruch 1, **dadurch gekennzeichnet, dass** das axial innere Ende der zusätzlichen Schicht (43-543) radial außerhalb des Rands der radial äußeren Arbeitslaufflächenschicht (42-542) liegt.

3. Reifen (1-51) nach Anspruch 1 oder 2, **dadurch ge-**

**kennzeichnet, dass** zwischen mindestens einem Teil der Arbeitslaufflächenschichten (41-541, 42-542) eine Schicht P aus kautschukhaltigen Kohäsionsgemischen angeordnet ist, und dass das axial äußere Ende der Schicht P axial zwischen den Enden der Arbeitslaufflächenschichten (41-541, 42-542), die axial die am wenigsten breite und die breiteste sind, liegt.

4. Reifen (1-51) nach Anspruch 3, **dadurch gekennzeichnet, dass** das Verhältnis des Elastizitätsmoduls der Schicht P zum Elastizitätsmodul der Zwischenlagenschicht der Arbeitsschicht neben der zusätzlichen Schicht (43-543) zwischen 0,5 und 1 beträgt.

5. Reifen (1-51) nach Anspruch 3 oder 4, **dadurch gekennzeichnet, dass** die axiale Breite D der Schicht P, die zwischen dem axial inneren Ende der Schicht P und dem Ende der axial am wenigsten breiten Arbeitslaufflächenlage (42-542) liegt, derart ist, dass:

$$3.\phi_2 \leq D \leq 20.\phi_2$$

wobei $\phi_2$ der Durchmesser der Verstärkungselemente der radial äußeren Arbeitslaufflächenlage ist.

6. Reifen (1-51) nach einem der Ansprüche 3 bis 5, **dadurch gekennzeichnet, dass** die axiale Breite D der Schicht P aus kautschukhaltigem Kohäsionsgemisch, die zwischen dem axial inneren Ende der Schicht P aus kautschukhaltigem Kohäsionsgemisch und dem axial äußeren Ende der Arbeitslaufflächenschicht (42-542), die axial die am wenigsten breite ist, liegt, größer als 5 mm ist.

7. Reifen (1-51) nach einem der Ansprüche 3 bis 6, **dadurch gekennzeichnet, dass** die Schicht P am axial äußeren Ende der axial am wenigsten breiten Arbeitslaufflächenlage (42-542) eine Stärke derart aufweist, dass die radiale Entfernung d zwischen den zwei Arbeitslaufflächenlagen (41-541, 42-542), die durch die Schicht P getrennt sind, die folgende Gleichung erfüllt:

$$3/5.\phi_2 < d < 5.\phi_2$$

wobei $\phi_2$ der Durchmesser der Verstärkungselemente der radial äußeren Arbeitslaufflächenlage ist.

8. Reifen (1-51) nach einem der vorhergehenden Ansprüche, **dadurch gekennzeichnet, dass** der Unterschied zwischen der axialen Breite der axial breitesten Arbeitslaufflächenschicht (41-541) und der axialen Breite der axial am wenigsten breiten Arbeitslaufflächenschicht (42-542) zwischen 5 und 30 mm liegt.

9. Reifen (1-51) nach einem der vorhergehenden Ansprüche, **dadurch gekennzeichnet, dass** der Winkel, der mit der Umfangsrichtung von den Verstärkungselementen der Arbeitslaufflächenschichten (41-541, 42-542) gebildet wird, kleiner ist als 30° und vorzugsweise kleiner als 25°.

10. Reifen (1-51) nach einem der vorhergehenden Ansprüche, **dadurch gekennzeichnet, dass** die Arbeitslaufflächenschichten (41-541, 42-542) Verstärkungselemente aufweisen, die von einer Lage zur anderen gekreuzt sind, die mit der Umfangsrichtung variable Winkel entlang der axialen Richtung einnehmen.

11. Reifen (21-51) nach einem der vorhergehenden Ansprüche, **dadurch gekennzeichnet, dass** die Laufflächenkronenbewehrung (24-54) radial außerhalb durch mindestens eine zusätzliche Lage (244-544), Schutzlage genannt, aus sogenannten elastischen Verstärkungselementen ergänzt ist, die zu der Umfangsrichtung mit einem Winkel zwischen 10° und 45° und mit gleicher Richtung wie der Winkel, der von den nicht dehnbaren Elementen der Arbeitslaufflächenlage (42-542), die radial neben ihr liegt, ausgerichtet sind.

12. Reifen (21-51) nach einem der vorhergehenden Ansprüche, **dadurch gekennzeichnet, dass** die Laufflächenkronenbewehrung (24-54) eine Triangulationsschicht (245-545) aufweist, die aus metallischen Verstärkungselementen gebildet ist, die mit der Umfangsrichtung Winkel größer als 40° einnehmen.

13. Reifen (1-51) nach einem der vorhergehenden Ansprüche, **dadurch gekennzeichnet, dass** die Verstärkungselemente der zusätzlichen Schicht (43-543) metallische Verstärkungselemente sind.

14. Reifen (1-51) nach einem der Ansprüche 1 bis 12, **dadurch gekennzeichnet, dass** die Verstärkungselemente der zusätzlichen Schicht (43-543) Textilverstärkungselemente sind.

15. Reifen (41) nach einem der vorhergehenden Ansprüche, **dadurch gekennzeichnet, dass** die Laufflächenkronenbewehrung (44) mindestens eine ununterbrochene Schicht (446) umfänglicher Verstärkungselemente aufweist.

16. Reifen (41) nach Anspruch 15, **dadurch gekennzeichnet, dass** die axiale Breite mindestens einer ununterbrochenen Schicht (446) umfänglicher Verstärkungselemente kleiner ist als die axiale Breite der axial breitesten Arbeitslaufflächenschicht (441).

**17.** Reifen (41) nach Anspruch 15 oder 16, **dadurch gekennzeichnet, dass** mindestens eine ununterbrochene Schicht (446) umfänglicher Verstärkungselemente radial zwischen zwei Arbeitslaufflächenschichten (441, 442) angeordnet ist.

**18.** Reifen (41) nach Anspruch 17, **dadurch gekennzeichnet, dass** die axialen Breiten der Arbeitslaufflächenschichten (441, 442) radial neben der ununterbrochenen Schicht (446) umfänglicher Verstärkungselemente größer sind als die axiale Breite der ununterbrochenen Schicht umfänglicher Verstärkungselemente.

**19.** Reifen (41) nach einem der Ansprüche 15 bis 18, **dadurch gekennzeichnet, dass** die Verstärkungselemente mindestens einer ununterbrochenen Schicht (446) umfänglicher Verstärkungselemente metallische Verstärkungselemente sind, die ein Sekantenmodul von 0,7 % Dehnung zwischen 10 und 120 GPa und ein maximales Tangentmodul kleiner als 150 GPa aufweisen.

**20.** Reifen (41) nach Anspruch 19, **dadurch gekennzeichnet, dass** das Sekantenmodul der Verstärkungselemente zu 0,7 % Dehnung kleiner ist als 100 GPa, vorzugsweise größer als 20 GPa und vorzugsweise zwischen 30 und 90 GPa liegt.

**21.** Reifen (41) nach einem der Ansprüche 19 oder 20, **dadurch gekennzeichnet, dass** das maximale Tangentmodul der Verstärkungselemente kleiner ist als 130 GPa und vorzugsweise kleiner als 120 GPa.

**22.** Reifen (41) nach einem der Ansprüche 15 bis 21, **dadurch gekennzeichnet, dass** die Verstärkungselemente mindestens einer ununterbrochenen Schicht (446) umfänglicher Verstärkungselemente metallische Verstärkungselemente sind, die eine Zugspannungskurve in Abhängigkeit von der relativen Dehnung mit schwachen Gefällen für schwache Dehnungen und einem im Wesentlichen konstanten und starken Gefälle für die größeren Dehnungen aufweisen.

**23.** Reifen (41) nach einem der Ansprüche 15 bis 18, **dadurch gekennzeichnet, dass** die Verstärkungselemente mindestens einer ununterbrochenen Schicht (446) umfänglicher Verstärkungselemente metallische Verstärkungselemente sind, die derart geschnitten sind, dass sie Abschnitte mit einer Länge bilden, die kleiner ist als der Umfang der kürzesten Lage, aber größer als 0,1 Mal der Umfang, wobei die Schnitte zwischen den Abschnitten axial zueinander versetzt sind, wobei das Zugelastizitätsmodul pro Breiteneinheit der ununterbrochenen Schicht umfänglicher Verstärkungselemente vorzugsweise kleiner ist als das Zugelastizitätsmodul der dehnbarsten Arbeitslaufflächenschicht, das unter den gleichen Bedingungen gemessen wird.

**24.** Reifen (41) nach einem der Ansprüche 15 bis 18, **dadurch gekennzeichnet, dass** die Verstärkungselemente mindestens einer ununterbrochenen Schicht (446) umfänglicher Verstärkungselemente wellige metallische Verstärkungselemente sind, wobei das Verhältnis $a/\lambda$ der Amplitude der Welligkeit a zu der Wellenlänge $\lambda$ maximal gleich 0,09 ist, wobei das Zugelastizitätsmodul pro Breiteneinheit der ununterbrochenen Schicht umfänglicher Verstärkungselemente vorzugsweise kleiner ist als das Zugelastizitätsmodul der dehnbarsten Arbeitslaufflächenschicht, das unter den gleichen Bedingungen gemessen wird.

## Claims

**1.** A tire (1-51) having a radial carcass reinforcement (2-52) comprising a crown reinforcement (4-54) formed of at least two working crown layers (41-541, 42-542) of inextensible reinforcement elements, which are crossed from one ply to the other, forming angles of between 10° and 45° with the circumferential direction, which itself is topped radially by a tread (5-55), said tread being joined to two beads by means of two sidewalls, the axially widest working crown layer (41-541) being radially internal to the other working crown layers (42-542), **characterized in that** it additionally comprises in each shoulder at least one layer (43-543) of reinforcement elements which are parallel to each other in the layer and forming an angle with the reinforcement elements of the working layer radially adjacent to said additional layer between 80 and 90°, **in that** the axially inner end of said additional layer (43-543) is radially adjacent to the edge of the radially outer working crown layer (42-542), and **in that** at least part of said additional layer (43-543) is radially and/or axially adjacent to the edge of the axially widest working crown layer (41-541).

**2.** A tire (1-51) according to Claim 1, **characterized in that** the axially inner end of said additional layer (43-543) is radially external to the edge of the radially outer working crown layer (42-542).

**3.** A tire (1-51) according to Claim 1 or 2, **characterized in that** a layer P of cohesive rubber mixes is arranged between at least part of the working crown layers (41-541, 42-542), and **in that** the axially outer end of the layer P is axially between the ends of the axially least wide and widest working crown layers (41-541, 42-542).

**4.** A tire (1-51) according to Claim 3, **characterized in**

**that** the ratio of the elasticity modulus of the layer P to the elasticity modulus of the calendering layer of the working layer adjacent to the additional layer (43-543) is of between 0.5 and 1.

5. A tire (1-51) according to Claim 3 or 4, **characterized in that** the axial width D of the layer P between the axially inner end of said layer P and the end of the axially least wide working crown ply (42-542) is such that:

$$3.\phi_2 \leq D \leq 20.\phi_2$$

where $\phi_2$ is the diameter of the reinforcement elements of the radially outer working crown ply.

6. A tire (1-51) according to one of Claims 3 to 5, **characterized in that** the axial width D of the layer of cohesive rubber mix P between the axially inner end of said layer of cohesive rubber mix P and the axially outer end of the axially least wide working crown layer (42-542) is greater than 5 mm.

7. A tire (1-51) according to one of Claims 3 to 6, **characterized in that** the layer P, at the axially outer end of the axially least wide working crown ply (42-542), has a thickness such that the radial distance d between the two working crown plies (41-541, 42-542), separated by said layer P, satisfies the relationship:

$$3/5.\phi_2 < d < 5.\phi_2$$

where $\phi_2$ is the diameter of the reinforcement elements of the radially outer working crown ply.

8. A tire (1-51) according to one of the preceding claims, **characterized in that** the difference between the axial width of the axially widest working crown layer (41-541) and the axial width of the axially least wide working crown layer (42-542) is between 5 and 30 mm.

9. A tire (1-51) according to one of the preceding claims, **characterized in that** the angle formed with the circumferential direction by the reinforcement elements of the working crown layers (41-541, 42-542) is less than 30° and preferably less than 25°.

10. A tire (1-51) according to one of the preceding claims, **characterized in that** the working crown layers (41-541, 42-542) comprise reinforcement elements, crossed from one ply to the other, forming angles which are variable in the axial direction with the circumferential direction.

11. A tire (21-51) according to one of the preceding claims, **characterized in that** the crown reinforcement (24-54) is finished off radially to the outside by at least one supplementary ply (244-544), referred to as a protective ply, of what are called elastic reinforcement elements, which are oriented relative to the circumferential direction at an angle of between 10° and 45° and of the same direction as the angle formed by the inextensible elements of the working ply (42-542) which is radially adjacent thereto.

12. A tire (21-51) according to one of the preceding claims, **characterized in that** the crown reinforcement (24-54) comprises a triangulation layer (245-545) formed of metallic reinforcement elements forming angles greater than 40° with the circumferential direction.

13. A tire (1-51) according to one of the preceding claims, **characterized in that** the reinforcement elements of said additional layer (43-543) are metallic reinforcement elements.

14. A tire (1-51) according to one of Claims 1 to 12, **characterized in that** the reinforcement elements of said additional layer (43-543) are textile reinforcement elements.

15. A tire (41) according to one of the preceding claims, **characterized in that** the crown reinforcement (44) comprises at least one continuous layer (446) of circumferential reinforcement elements.

16. A tire (41) according to Claim 15, **characterized in that** the axial width of at least one continuous layer (446) of circumferential reinforcement elements is less than the axial width of the axially widest working crown layer (441).

17. A tire (41) according to Claim 15 or 16, **characterized in that** at least one continuous layer (446) of circumferential reinforcement elements is arranged radially between two working crown layers (441, 442).

18. A tire (41) according to Claim 17, **characterized in that** the axial widths of the working crown layers (441, 442) radially adjacent to the continuous layer of circumferential reinforcement elements are greater than the axial width of said continuous layer (446) of circumferential reinforcement elements.

19. A tire (41) according to one of Claims 15 to 18, **characterized in that** the reinforcement elements of at least one continuous layer (446) of circumferential reinforcement elements are metallic reinforcement elements having a secant modulus at 0.7% elongation of between 10 and 120 GPa and a maximum tangent modulus of less than 150 GPa.

20. A tire (41) according to Claim 19, **characterized in that** the secant modulus of the reinforcement elements at 0.7% elongation is less than 100 GPa, preferably greater than 20 GPa and more preferably still of between 30 and 90 GPa.

21. A tire (41) according to one of Claims 19 or 20, **characterized in that** the maximum tangent modulus of the reinforcement elements is less than 130 GPa and preferably less than 120 GPa.

22. A tire (41) according to one of Claims 15 to 21, **characterized in that** the reinforcement elements of at least one continuous layer (446) of circumferential reinforcement elements are metallic reinforcement elements having a curve of tensile stress as a function of the relative elongation having shallow gradients for the low elongations and a substantially constant, steep gradient for the higher elongations.

23. A tire (41) according to one of Claims 15 to 18, **characterized in that** the reinforcement elements of at least one continuous layer (446) of circumferential reinforcement elements are metallic reinforcement elements cut so as to form sections of a length less than the circumference of the least long ply, but greater than 0.1 times said circumference, the cuts between sections being axially offset from each other, the modulus of elasticity in tension per unit of width of the continuous layer of circumferential reinforcement elements preferably being less than the modulus of elasticity in tension, measured under the same conditions, of the most extensible working crown layer.

24. A tire (41) according to one of Claims 15 to 18, **characterized in that** the reinforcement elements of at least one continuous layer (446) of circumferential reinforcement elements are undulating metallic reinforcement elements, the ratio $a/\lambda$ of the amplitude of undulation $a$ to the wavelength $\lambda$ being at most equal to 0.09, the modulus of elasticity in tension per unit of width of the continuous layer of circumferential reinforcement elements preferably being less than the modulus of elasticity in tension, measured under the same conditions, of the most extensible working crown layer.

FIG.1

FIG.2

FIG.3

FIG.4

FIG.5

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 0582196 A
- FR 1389428
- FR 2222232
- FR 2728510
- WO 2004076206 A
- JP 63151504 A
- US 6367527 B
- WO 9924269 A